(19) Europäisches Patentamt
European Patent Office
Office européen des brevets

(11) **EP 2 115 868 B1**

(12) **EUROPÄISCHE PATENTSCHRIFT**

(45) Veröffentlichungstag und Bekanntmachung des Hinweises auf die Patenterteilung:
**12.06.2019 Patentblatt 2019/24**

(21) Anmeldenummer: **08707988.5**

(22) Anmeldetag: **18.01.2008**

(51) Int Cl.:
*H02P 29/00* (2016.01)     *H02P 9/10* (2006.01)
*H02P 9/30* (2006.01)

(86) Internationale Anmeldenummer:
**PCT/EP2008/050543**

(87) Internationale Veröffentlichungsnummer:
**WO 2008/092755 (07.08.2008 Gazette 2008/32)**

(54) **VERFAHREN ZUR REGELUNG DER TEMPERATUR EINES GENERATORS UND GENERATORREGLER**

METHOD FOR CONTROLLING THE TEMPERATURE OF A GENERATOR AND GENERATOR CONTROLLER

PROCÉDÉ DE RÉGULATION DE LA TEMPÉRATURE D'UN GÉNÉRATEUR ET UNRÉGULATEUR DE GÉNÉRATEUR

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **29.01.2007 DE 102007004381**
**16.03.2007 DE 102007012702**

(43) Veröffentlichungstag der Anmeldung:
**11.11.2009 Patentblatt 2009/46**

(73) Patentinhaber: **SEG Automotive Germany GmbH**
**70499 Stuttgart (DE)**

(72) Erfinder:
• **HERZ, Michael**
**70469 Stuttgart (DE)**
• **LAUFENBERG, Xaver**
**71691 Freiberg (DE)**
• **KOSS, Thomas**
**72768 Reutlingen (DE)**
• **SUELZLE, Helmut**
**71691 Freiberg (DE)**

(74) Vertreter: **Steinbauer, Florian et al**
**Dehns Germany**
**Theresienstraße 6-8**
**80333 München (DE)**

(56) Entgegenhaltungen:
**EP-A- 0 438 884       EP-A- 1 286 450**
**EP-A- 1 345 098       WO-A-03/058793**
**DE-A1- 10 360 868    DE-A1-102006 019 625**

**Beschreibung**

Die Erfindung betrifft ein Verfahren zur Regelung eines Generators und einen Generatorregler.

Stand der Technik

Bei in Kraftfahrzeugen verwendeten Generatoren ist die im Betrieb auftretende Isttemperatur der Komponenten des Generators abhängig von der Bauart des Generators, der Einbausituation im Kraftfahrzeug, der Kühllufttemperatur und der eigenen Verlustleistung der Komponenten des Generators.

In bestimmten Situationen kann die Isttemperatur der Komponenten auf Werte über einer zulässigen Höchsttemperatur Tmax ansteigen. Dies führt zu einem schnelleren Verschleiß, einer Beeinträchtigung oder gar einem Komplettausfall einer Komponente oder des gesamten Generators.

Um dies zu verhindern ist bei bekannten Kraftfahrzeuggeneratoren eine Einheit vorgesehen, die ab einer vorgegebenen Temperatur T1 unterhalb der zulässigen Höchsttemperatur Tmax die Ausgangsspannung des Generators reduziert. Dadurch reduziert sich auch die vom Generator abgegebene Leistung und die Eigenerwärmung des Generators. Als Folge davon sinkt die Temperatur des Generators wieder und es kann ein Zustand unterhalb der zulässigen Höchsttemperatur eingestellt werden. Dies erfolgt beispielsweise im Spannungsregler des Generators.

Eine zur Reduzierung der Generatorleistung vorgesehene Abregelung der Generatorausgangsspannung soll in der Praxis so spät wie möglich und so selten wie möglich erfolgen. Dies ist bei gegebenen Bauteilegrenztemperaturen mittels einer steil verlaufenden Abregelkurve über einen möglichst geringen Temperaturbereich durchführbar. Ein Extremfall ist eine Umschaltung der Regelspannung bei einer vorgegebenen Temperatur ohne Verwendung einer Rampe.

Die Charakteristik der Abregelung soll bezüglich Steilheit und Geschwindigkeit beispielsweise so ausgelegt sein, dass die sich ergebenden Spannungsänderungen einen möglichst geringen Einfluss auf die Helligkeit der Armaturenbeleuchtung haben, da Helligkeitsschwankungen der Armaturenbeleuchtung vom Fahrer des Kraftfahrzeugs als störend empfunden werden.

Im Falle einer Realisierung der Abregelung mittels analoger Schaltungstechnik wird eine lineare, stufenlose Kennlinie verwendet, gemäß welcher die im Normalbetrieb vorliegende Sollspannung nach dem Überschreiten der oben genannten Temperatur T1 linear abfällt.

Im Falle einer Realisierung der Abregelung mittels digitaler Schaltungstechnik wird eine reduzierte Sollspannung vorgegeben, die auf Digitalwerten basiert. Diese Sollspannung wird über mehrere Stufen angefahren. Je feiner die Stufung ist, desto größer und kostspieliger ist der Aufwand für eine Realisierung.

Nimmt man beispielsweise an, dass der Abregelbereich 8°C beträgt, eine Spannungsabsenkung um 4V erfolgen soll und vier Stufen innerhalb des Abregelbereiches verwendet werden, dann liegt eine Temperaturauflösung von 2°C vor. Daraus resultiert je Temperaturschritt eine Spannungsänderung von 1V. Eine derartige Spannungsänderung ist beispielsweise mit Helligkeitsschwankungen der Armaturenbeleuchtung verbunden, die vom Fahrer deutlich erkannt und als störend empfunden werden.

Aus der EP 0 462 503 B1 ist eine Vorrichtung zur Regelung eines Generators bekannt. Diese Vorrichtung weist eine Erregerwicklung und einen Spannungsregler auf. Der Spannungsregler regelt durch Beeinflussung des Erregerstroms des Generators dessen Ausgangsspannung. Weiterhin weist der Spannungsregler Mittel zur Temperaturerfassung auf. Der Generator ist so ausgelegt, dass bei starker Belastung und/oder hohen Außentemperaturen insbesondere bei geringer Generatordrehzahl eine erlaubte Grenztemperatur am Generator oder der Vorrichtung selbst auftritt und zur Erhöhung der Leistung des Generators eine gegenüber der Ausgangsspannung des Generators erhöhte Spannung an die Erregerwicklung zuführbar ist. Weiterhin sind Mittel zur Beeinflussung des Erregerstromes vorgesehen, die vor oder bei Erreichen der Grenztemperatur an einer vorgebbaren Stelle den Erregerstrom absenken. Des Weiteren ist in der EP 0 462 503 B1 eine Vorrichtung zur Regelung eines Generators beschrieben, bei welcher der Wert des Widerstandes der Erregerwicklung kleiner ist als ein Wert, der auch im ungünstigsten Fall zu keiner thermischen Überlastung des Generators oder des Reglers führt, und bei welcher der Erregerstrom zeitweilig gegenüber dem Nennerregerstrom erhöht ist. Ferner sind Mittel vorgesehen, die beim Erreichen einer Grenztemperatur an einer vorgebbaren Stelle den Erregerstrom absenken.

Die DE 10 2006 019 625 A1 zeigt eine Temperaturdetektorvorrichtung zum Detektieren einer Temperatur eines Elektrogenerators. Ein die Ausgangsleistung des Elektrogenerators begrenzenden Begrenzer ist dazu konfiguriert, die Ausgangsleistung des Elektrogenerators zu begrenzen, wenn die Temperatur des Elektrogenerators, die Mit Hilfe der Temperaturbestimmungsvorrichtung bestimmt wird, über einem vorbestimmten oberen Grenzwert liegt, indem der Begrenzer einen Sollwert der Ausgangsspannung des Elektrogenerators absenkt.

Die EP 0 438 884 A1 betrifft eine Regelvorrichtung für einen elektrischen Generator. Ein Zerhacker ist zur Regelung eines Feldstroms einer Feldwicklung des Generators in Abhängigkeit von einem ersten Strom-Sollwert vorgesehen. Ein Temperatur-Detektorkreis ist zur Erfassung der Temperatur des Zerhackers vorgesehen, um mindestens einen weiteren Strom-Sollwert zu erzeugen. Eine Einrichtung ist zur Auswahl zwischen dem ersten und dem weiteren Strom-Sollwert vorgesehen.

Vorteile der Erfindung

Die Verwendung eines Verfahrens gemäß der vorliegenden Erfindung weist demgegenüber den Vorteil auf, dass eine Abregelkennlinie realisiert wird, die auf einer Veränderung der Sollausgangsspannung des Generators in Abhängigkeit von der am Generator gemessenen Temperatur beruht. Die Sollausgangsspannung des Generators wird stufen- bzw. schrittweise solange reduziert, bis die gemessene Temperatur wieder kleiner ist als ein vorgegebener Temperaturschwellenwert. Die Höhe einer Stufe bzw. die Schrittweite der Erniedrigung der Sollausgangsspannung des Generators ist kleiner oder gleich 0,25V, vorzugsweise kleiner oder gleich 0,1V, so dass keine vom Fahrer des Fahrzeugs als störend empfundenen Schwankungen der Helligkeit der Armaturenbeleuchtung auftreten.

Wird erkannt, dass die gemessene Temperatur wieder kleiner ist als der vorgegebene Temperaturschwellenwert, dann wird die Sollausgangsspannung des Generators wieder auf einen erhöhten Sollausgangsspannungswert gesetzt. Dieser wird vorzugsweise durch eine schrittweise Erhöhung der Sollausgangsspannung angefahren, wobei die Schrittweite wiederum kleiner oder gleich 0,25V, vorzugsweise kleiner oder gleich 0,1V, ist.

Durch diese Vorgehensweise wird des Weiteren erreicht, dass die Abregelung der Generatorausgangsspannung nur soweit erfolgt wie es unbedingt nötig ist und dass diese Abregelung so schnell wieder beendet wird wie dies möglich ist. Die Ausgangsleistung des Generators wird demnach weniger herabgesetzt als dies beim Stand der Technik der Fall ist.

Gemäß einer vorteilhaften Ausgestaltung der Erfindung werden zwischen dem vorgegebenen Schwellenwert und einer vorgegebenen Maximaltemperatur ein oder mehrere weitere Temperaturschwellenwerte vorgeben. Überschreitet ein gemessener Isttemperaturwert einen dieser weiteren Temperaturschwellenwerte, dann erfolgen bei unveränderter Sollausgangsspannung des Generators mehrere aufeinanderfolgende Messungen der Isttemperatur. Lassen diese erkennen, dass die Isttemperatur nicht mehr ansteigt oder wieder abgesunken ist, dann erfolgt keine weitere Erniedrigung der Sollausgangsspannung des Generators, so dass die Ausgangsleistung des Generators nicht mehr verringert wird als dies unbedingt nötig ist.

Für den zeitlichen Verlauf des Übergangs von einem Sollausgangsspannungswert zum nächsten höheren oder niedrigeren Sollausgangsspannungswert gibt es verschiedene Ausführungsformen. Gemäß einer ersten Ausführungsform erfolgt dieser Übergang monoton steigend oder monoton fallend. Diese Ausführungsform ist einfach zu realisieren. Eine zweite Ausführungsform besteht darin, den zeitlichen Verlauf der Übergänge steigend und fallend mit unterschiedlichen Geschwindigkeiten zu realisieren. Ferner kann sich der zeitliche Verlauf der Übergänge exponentiell ändern. Schließlich kann die Geschwindigkeit der Übergänge auch in Abhängigkeit von der Differenz der Isttemperatur zum vorgegebenen Temperaturschwellenwert oder in Abhängigkeit von der Differenz der Isttemperatur zur zulässigen Maximaltemperatur des Generators gewählt werden. Weiterhin könnte optional eine Korrektur der aktuellen Sollspannung in Abhängigkeit von der Temperatur und der Änderungsgeschwindigkeit der Temperatur realisiert werden. Dies entspricht beispielsweise einem D-Anteil, welcher bei einem starken Temperaturanstieg wie im Startfall die Abregeltemperatur mittels eines D-Anteils reduziert und somit Überschwinger verhindert.

Weitere vorteilhafte Eigenschaften der Ausgestaltungen der Erfindung ergeben sich aus der Erläuterung eines Ausführungsbeispiels anhand der Zeichnung.

Zeichnung

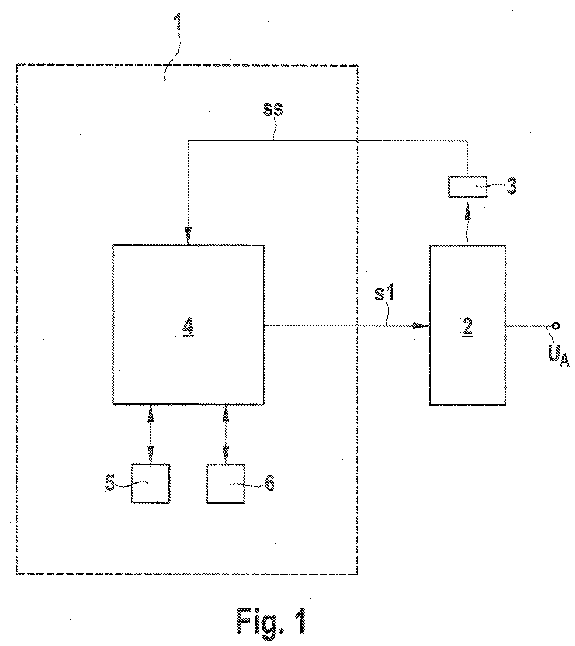

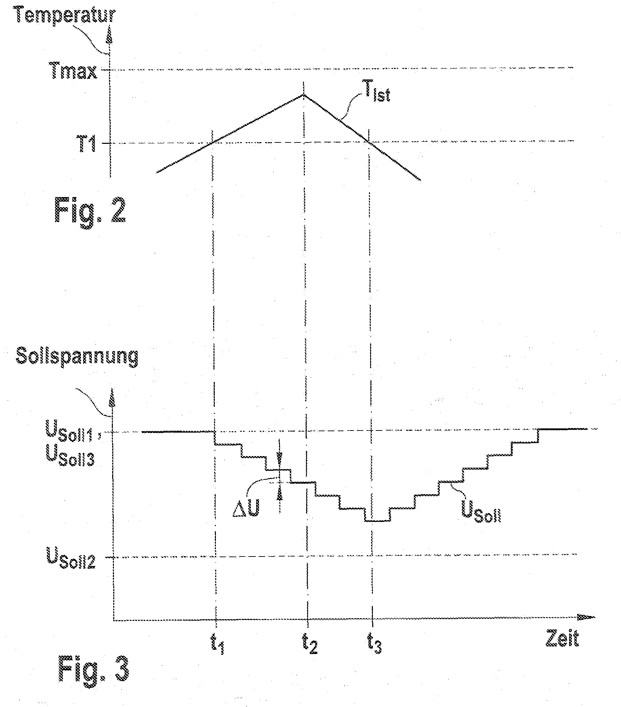

Die Figur 1 zeigt ein Blockschaltbild zur Veranschaulichung der Regelung eines Generators. Die Figur 2 zeigt ein Diagramm, in welchem die Isttemperatur am Generator über der Zeit aufgetragen ist. Die Figur 3 zeigt ein Diagramm, aus welchem der zeitliche Verlauf der Sollspannung des Generators ersichtlich ist.

Beschreibung

Die Figur 1 zeigt ein Blockschaltbild zur Veranschaulichung der Regelung eines Generators. Gemäß dieser Figur ist ein Generatorregler 1 vorgesehen, welcher einem Generator 2 Steuersignale s1 zuführt. Bei dem Generator 2 handelt es sich vorzugsweise um einen Kraftfahrzeuggenerator.

Im Betrieb des Generators 2 können bezüglich einzelner Komponenten des Generators oder des gesamten Generators grundsätzlich Isttemperaturen $T_{Ist}$ auftreten, die größer sind als eine zulässige Maximaltemperatur $T_{Max}$. Treten derartige Isttemperaturen auf, dann kann es zu einer Beschädigung einzelner Komponenten des Generators, zu einer Beschädigung des gesamten Generators, zu einer Zerstörung von Komponenten des Generators oder zu einer Zerstörung des gesamten Generators kommen.

Derartige unerwünschte Auswirkungen unzulässig hoher Temperaturen können wie folgt vermieden werden: Im Normalbetrieb des Generators stellt eine Rechen- und Steuereinheit 4 des Generatorreglers 1 dem Generator 2 Steuersignale s1 bereit, die der Vorgabe eines gewünschten Sollausgangsspannungswerts $U_{Soll1}$ des Generators entsprechen. Die aufgrund dieser Steuersignale vom Generator ausgegebene Generatorausgangsspannung ist mit $U_A$ bezeichnet.

Der Generator 2 ist mit einem Temperatursensor 3 thermisch gekoppelt, welcher zur direkten oder indirekten Erfassung der am Generator 2 herrschenden Isttemperatur $T_{Ist}$ vorgesehen ist. Die vom Temperatursensor 3 bereitgestellten Sensorausgangssignale ss, die eine Information über die gemessene Isttemperatur $T_{Ist}$

enthalten, werden der Rechen- und Steuereinheit 4 des Generatorreglers 1 zugeführt. Der in der Figur 1 gezeigte Temperatursensor 3 ist außerhalb des Generatorreglers 1 positioniert. Er kann aber gemäß einer alternativen Ausführungsform auch Bestandteil des Generatorreglers 1 sein.

In der Rechen- und Steuereinheit 4 erfolgt ein Vergleich der gemessenen Isttemperatur $T_{Ist}$ mit einem Temperaturschwellenwert T1. Dieser Temperaturschwellenwert T1 ist in einem Speicher 5 gespeichert und wird von der Rechen- und Steuereinheit 4 aus dem Speicher 5 abgerufen, um den genannten Vergleich durchführen zu können. Solange die gemessene Isttemperatur $T_{Ist}$ kleiner ist als der Temperaturschwellenwert T1, stellt die Bedien- und Steuereinheit 4 an ihrem Ausgang weiterhin Steuersignale s1 für den Generator 2 zur Verfügung, die der Vorgabe der gewünschten Sollausgangsspannung $U_{Soll1}$ des Generators entsprechen.

Kommt es im Betrieb aufgrund einer starken Belastung des Generators zu einem Anstieg der Isttemperatur $T_{Ist}$ derart, dass die gemessene Isttemperatur $T_{Ist}$ den Temperaturschwellenwert T1 überschreitet, dann gibt die Rechen- und Steuereinheit 4 einen erniedrigten Sollausgangsspannungswert $U_{Soll2}$ für den Generator 2 vor.

Zum Anfahren dieses erniedrigten Sollausgangsspannungswertes $U_{Soll2}$ erfolgt ausgehend vom Sollausgangsspannungswert $U_{soll1}$ durch eine entsprechende Ausgabe von Steuersignalen s1 ein schrittweises Erniedrigen der Sollausgangsspannung des Generators mit einer Schrittweite $\Delta U$, die kleiner oder gleich 0,25V, vorzugsweise kleiner oder gleich 0,1V, ist. Diese Schrittweite ist in vorteilhafter Weise derart gewählt, dass vom Fahrer des jeweiligen Fahrzeugs keine störenden Helligkeitsschwankungen der Armaturenbeleuchtung erkennbar sind und auch keine anderen negativen Effekte wahrnehmbar sind. Optional kann dieser Gradient variabel einstellbar gehalten werden, um eine Anpassung an eine jeweils vorliegende Applikation zu erlauben. Ist die Schrittweite kleiner oder gleich 0,1V, dann sind störende Helligkeitsschwankungen sicher nicht mehr erkennbar.

Um zu erreichen, dass die Erniedrigung der Sollausgangsspannung des Generators so kurzzeitig wie möglich erfolgt, wird nach jedem Sollspannungserniedrigungsschritt oder parallel zu dieser Spannungserniedrigung von der Rechen- und Steuereinheit 4 überprüft, ob der aktuelle Temperaturistwert $T_{Ist}$ wieder kleiner ist als der vorgegebene Temperaturschwellenwert T1. Solange dies nicht der Fall ist, erfolgt eine weitere schrittweise Erniedrigung der Sollausgangsspannung des Generators mit der Schrittweite $\Delta U$, die kleiner oder gleich 0,25V, vorzugsweise kleiner oder gleich 0,1V, ist.

Erkennt die Rechen- und Steuereinheit 4 hingegen, dass der aktuelle Temperaturistwert $T_{Ist}$ wieder kleiner ist als der vorgegebene Temperaturschwellenwert T1, dann wird die Sollausgangsspannung des Generators wieder auf einen erhöhten Sollausgangsspannungswert $U_{Soll3}$ gesetzt und es erfolgt ein schrittweises Erhöhen der Sollausgangsspannung des Generators mit einer Schrittweite, die kleiner oder gleich 0,25V, vorzugsweise kleiner oder gleich 0,1V ist. Auch dabei erfolgt nach jedem Schritt ein erneutes Messen der Isttemperatur und ein Vergleich der gemessenen Isttemperatur mit dem Temperaturschwellenwert T1. Alternativ dazu kann die Spannung auch erst nach Erreichen des zu T1 gehörenden Sollausgangsspannungswertes $U_{Soll2}$ auf das Unterschreiten des Schwellenwertes T1 reagieren. Vorzugsweise entspricht der erhöhte Sollausgangsspannungswert $U_{Soll3}$ dem ursprünglichen Sollausgangsspannungswert $U_{Soll1}$ des Generators, so dass das genannte schrittweise Wiedererhöhen der Sollausgangsspannung des Generators solange erfolgt, bis der ursprüngliche Sollausgangsspannungswert $U_{Soll1}$ wieder erreicht ist.

Eine alternative Ausführungsform besteht darin, zwischen dem Temperaturschwellenwert T1 und der zulässigen Maximaltemperatur $T_{Max}$, welche größer ist als der Temperaturschwellenwert T1, weitere Temperaturschwellenwerte T2 und T3 vorzugeben, für welche gilt:

$$T1 \ < \ T2 \ < \ T3 \ < \ T_{Max}.$$

Bei dieser alternativen Ausführungsform wird beim Erreichen oder Überschreiten eines der genannten weiteren Temperaturschwellenwerte der momentane Wert für die Sollausgangsspannung des Generators für die Dauer mehrerer Schritte beibehalten und es erfolgt ein wiederholtes Messen der Isttemperatur am Generator während der Dauer dieser mehreren Schritte. Der Vorteil dieser alternativen Ausführungsform besteht darin, dass die Ausgangsleistung des Generators im Vergleich zur oben beschriebenen Ausführungsform erhöht bleibt und ein weiteres schrittweises Erniedrigen der Sollausgangsspannung nur dann erfolgt, wenn während der Dauer dieser mehreren Schritte die gemessene Isttemperatur auch weiterhin über dem Temperaturschwellenwert T1 verbleibt und dass ein schrittweises Wiedererhöhen der Sollausgangsspannung bereits dann erfolgt, wenn während der Dauer dieser mehreren Schritte ein Sinken der gemessenen Isttemperatur unter den Temperaturschwellenwert T1 feststellbar ist.

Der zeitliche Verlauf des Übergangs von einem Spannungswert zum nächsten höheren oder niedrigeren Sollspannungswert kann linear sein, mit unterschiedlichen Geschwindigkeiten steigen bzw. fallen, exponentiell sein, abhängig vom Temperaturschwellenwert T1 gewählt sein oder abhängig vom Abstand zur Maximaltemperatur $T_{Max}$ sein.

Die Figur 2 zeigt ein Diagramm, in welchem die gemessene Isttemperatur über der Zeit aufgetragen ist. Aus diesem Diagramm ist ersichtlich, dass die gemessene Isttemperatur $T_{Ist}$ zum Zeitpunkt t1 den Temperaturschwellenwert T1 überschreitet, dann bis zum Zeitpunkt t2 weiter ansteigt, ab dem Zeitpunkt t2 wieder fällt und zum Zeitpunkt t3 den Temperaturschwellenwert T1 wieder unterschreitet. Die zum Zeitpunkt t2 vorliegende Isttemperatur ist kleiner als die zulässige Maximaltemperatur $T_{Max}$.

Die Figur 3 zeigt ein Diagramm, aus welchem der zeitliche Verlauf der Sollausgangsspannung des Generators ersichtlich ist. Die Sollausgangsspannung des Generators bis zum Zeitpunkt t1 entspricht dem Sollausgangsspannungswert $U_{Soll1}$. Vom Zeitpunkt t1, an welchem die Isttemperatur $T_{Ist}$ den Temperaturschwellenwert T1 überschreitet, bis zum Zeitpunkt t3, an welchem die Isttemperatur $T_{Ist}$ den Temperaturschwellenwert T1 wieder unterschreitet, wird die Sollausgangsspannung schrittweise mit einer Schrittweite $\Delta U$ erniedrigt. Ab dem Zeitpunkt t3 steigt diese Sollausgangsspannung wieder schrittweise mit der Schrittweite $\Delta U$ an, bis sie den erhöhten Sollausgangsspannungswert $U_{Soll3}$, welcher beim gezeigten Ausführungsbeispiel mit dem ursprünglichen Sollausgangsspannungswert $U_{Soll1}$ übereinstimmt, erreicht hat.

Insbesondere ist aus der Figur 3 auch ersichtlich, dass die Sollausgangsspannung $U_{Soll}$ den vorgegebenen erniedrigten Sollausgangsspannungswert $U_{Soll2}$ im Rahmen der schrittweisen Erniedrigung der Sollausgangsspannung gar nicht erreicht, da bereits vorher die schrittweise Erniedrigung der Sollausgangsspannung des Generators dazu geführt hat, dass der gemessene Temperaturistwert $T_{Ist}$ den Temperaturschwellenwert T1 wieder unterschreitet.

Ein Vorteil der Erfindung ist, dass eine Abregelkennlinie realisiert wird, gemäß welcher die Sollausgangsspannung des Generators schrittweise im Sinne einer Treppenfunktion und in Abhängigkeit von der gemessenen Isttemperatur verändert wird. Durch das beschriebene Vorgehen wird ohne großen Aufwand hinsichtlich geringer Schrittweite bei der Erfassung der Isttemperatur eine quasi stetige Abregelkennlinie erzeugt, um Sprünge der Sollausgangsspannung des Generators zu vermeiden, welche zu Helligkeitsschwankungen der Armaturenbeleuchtung und anderen wahrnehmbaren Artefakten führen würden.

**Patentansprüche**

1. Verfahren zur Regelung eines Generators mit folgenden Schritten:

   - Vorgabe eines Sollausgangsspannungswerts ($U_{Soll1}$) des Generators,
   - Messen einer Isttemperatur ($T_{Ist}$) am Generator,
   - Vergleich der gemessenen Isttemperatur ($T_{Ist}$) mit einem vorgegebenen Temperaturschwellenwert (T1),
   - Vorgabe eines erniedrigten Sollausgangsspannungswertes ($U_{Soll2}$) des Generators, falls die gemessene Isttemperatur größer ist als der vorgegebene Temperaturschwellenwert,
   - schrittweises Erniedrigen der Sollausgangsspannung des Generators ausgehend von dem Sollausgangsspanungswert ($U_{Soll1}$) in mehreren Schritten jeweils mit einer Schrittweite, die kleiner oder gleich 0,25 V, vorzugsweise kleiner oder gleich 0,1 V, ist,
   - nach oder parallel zu jedem Schritt des schrittweisen Erniedrigens der Sollausgangsspannung des Generators erneutes Messen der Isttemperatur am Generator zum Erhalt eines neuen Isttemperaturwertes,
   - Vergleich des neuen Isttemperaturwertes mit dem vorgegebenen Temperaturschwellenwert und
   - Setzen der Sollausgangsspannung des Generators auf einen erhöhten Sollausgangsspannungswert ($U_{Soll3}$), falls der neue Isttemperaturwert kleiner ist als der vorgegebene Temperaturschwellenwert.

2. Verfahren nach Anspruch 1, **dadurch gekennzeichnet, dass** der erhöhte Sollausgangsspannungswert ($U_{Soll3}$) dem Sollausgangsspannungswert ($U_{Soll1}$) des Generators entspricht.

3. Verfahren nach Anspruch 1 oder 2, **gekennzeichnet durch** folgenden weiteren Schritt:

   - schrittweises Erhöhen der Sollausgangsspannung des Generators mit einer Schrittweite, die kleiner oder gleich 0,25 V, vorzugsweise kleiner oder gleich 0,1 V, ist.

4. Verfahren nach Anspruch 3, **gekennzeichnet durch** folgende weitere Schritte:

   - nach oder parallel zu jedem Schritt des schrittweisen Erhöhens der Sollausgangsspannung des Generators erneutes Messen der Isttemperatur am Generator zum Erhalt eines neuen Isttemperaturwertes,
   - Vergleich des neuen Isttemperaturwertes mit dem vorgegebenen Temperaturschwellenwert.

5. Verfahren nach einem der Ansprüche 1-3, **gekennzeichnet durch** folgende weitere Schritte:

   - Vorgabe einer Maximaltemperatur ($T_{Max}$), welche größer ist als der vorgegebene Temperaturschwellenwert (T1),
   - Vorgabe eines oder mehrerer weiterer Temperaturschwellenwerte (T2, T3), für welche gilt:

   $$T1 < T2 < T3 < T_{Max},$$

und

- Beibehaltung eines momentanen Sollausgangsspannungswerts für die Sollausgangsspannung des Generators für die Dauer mehrerer Schritte, falls der neue Temperaturistwert einen der weiteren Temperaturschwellenwerte (T2, T3) überschreitet, und
- wiederholtes Messen der Isttemperatur am Generator während der Dauer dieser mehreren Schritte.

6. Verfahren nach Anspruch 5, **gekennzeichnet durch** folgenden weiteren Schritt:

- schrittweises Erhöhen der Sollausgangsspannung des Generators mit einer Schrittweite, die kleiner oder gleich 0,25 V, vorzugsweise kleiner oder gleich 0,1 V, ist, wenn während des wiederholten Messens der Isttemperatur am Generator ein Sinken der Isttemperatur erkennbar ist.

7. Verfahren nach einem der vorhergehenden Ansprüche, **dadurch gekennzeichnet, dass** der zeitliche Verlauf des Übergangs von einem Sollausgangsspannungswert zum nächsten Sollausgangsspannungswert linear ist.

8. Verfahren nach einem der Ansprüche 1-6, **dadurch gekennzeichnet, dass** der zeitliche Verlauf des Übergangs von einem Sollausgangsspannungswert zum nächsten Sollausgangsspannungswert mit unterschiedlichen Geschwindigkeiten steigt bzw. fällt.

9. Verfahren nach einem der Ansprüche 1-6, **dadurch gekennzeichnet, dass** der zeitliche Verlauf des Übergangs von einem Sollausgangsspannungswert zum nächsten Sollausgangsspannungswert exponentiell verläuft.

10. Verfahren nach einem der Ansprüche 1-6, **dadurch gekennzeichnet, dass** der zeitliche Verlauf des Übergangs von einem Sollausgangsspannungswert zum nächsten Sollausgangsspannungswert abhängig ist vom Abstand zum Temperaturschwellenwert (T1).

11. Verfahren nach einem der Ansprüche 1-6, **dadurch gekennzeichnet, dass** der zeitliche Verlauf des Übergangs von einem Sollausgangsspannungswert zum nächsten Sollausgangsspannungswert abhängig ist vom Abstand zu einer Maximaltemperatur ($T_{Max}$).

12. Anordnung bestehend aus einem Temperatursensor (3) zur Messung einer Isttemperatur ($T_{ist}$) am Generator
und einem Generatorregler (1),
wobei der Generatorregler (1) eine Rechen- und Steuereinheit (4) aufweist,
wobei die Anordnung Mittel zur Durchführung der Schritte
eines oder mehrerer der Ansprüche 1-11 aufweist.

**Claims**

1. A method for controlling a generator comprising the following steps:

- presetting a target output voltage value ($U_{Soll1}$) of the generator,
- measuring an actual temperature ($T_{Ist}$) at the generator,
- comparing of the measured actual temperature ($T_{Ist}$) with a preset temperature threshold value (T1),
- presetting of a reduced target output voltage value ($U_{Soll2}$) of the generator, if the measured actual temperature is higher than the preset temperature threshold value,
- stepwise lowering of the target output voltage of the generator starting from the target output voltage value ($U_{Soll1}$) in a plurality of steps, each step having a step width which is less than or equal to 0.25 V, preferably less than or equal to 0.1 V,
- after or parallel to each step of the stepwise lowering of the target output voltage of the generator, re-measuring the actual temperature at the generator to obtain a new actual temperature value,
- comparing of the new actual temperature value with the preset temperature threshold value and
- Setting the target output voltage of the generator to an increased target output voltage value ($U_{Soll3}$), if the new actual temperature value is lower than the preset temperature threshold value.

2. A method according to claim 1, **characterized in that** the increased target output voltage value ($U_{Soll3}$) corresponds to the target output voltage value ($U_{Soll1}$) of the generator.

3. A method according to claim 1 or 2, further **characterized by** the following step:

- stepwise increasing the target output voltage of the generator with a step width which is less than or equal to 0.25 V, preferably less than or equal to 0.1 V.

4. A method according to claim 3, further **characterized by** the following steps:

- after or parallel to each step of the stepwise increasing of the target output voltage of the generator, re-measuring the actual temperature at the generator to obtain a new actual temperature value,

- comparing of the new actual temperature value with the preset temperature threshold value.

5. A method according to any one of claims 1-3, further **characterized by** the following steps:

- presetting a maximum temperature ($T_{Max}$) which is greater than the preset temperature threshold value (T1),
- presetting of one or more further temperature threshold values (T2, T3) for which applies:

$$T1 < T2 < T3 < T_{Max},$$

and

- maintaining an instantaneous target output voltage value for the target output voltage of the generator for the duration of several steps, if the new actual temperature value exceeds one of the other temperature threshold values (T2, T3), and
- repeated measuring of the actual temperature at the generator during the duration of these several steps.

6. A method according to claim 5, further **characterized by** the following step:

- stepwise increasing the target output voltage of the generator with a step width which is less than or equal to 0.25 V, preferably less than or equal to 0.1 V, if during the repeated measuring of the actual temperature at the generator a falling of the actual temperature is recognizable.

7. A method according to any one of the preceding claims, **characterized in that** the time course of the transition from one target output voltage value to the next target output voltage value is linear.

8. A method according to any one of claims 1-6, **characterized in that** the time course of the transition from one target output voltage value to the next target output voltage value respectively increases or decreases at different speeds.

9. A method according to any one of claims 1-6, **characterized in that** the time course of the transition from one target output voltage value to the next target output voltage value is exponential.

10. A method according to any one of claims 1-6, **char-**

**acterized in that** the time course of the transition from one target output voltage value to the next target output voltage value is dependent on the distance to the temperature threshold value (T1).

11. A method according to any one of claims 1-6, **characterized in that** the time course of the transition from one target output voltage value to the next target output voltage value is dependent on the distance to a maximum temperature ($T_{Max}$).

12. A device comprising a temperature sensor (3) for measuring an actual temperature ($T_{ist}$) at the generator and a generator controller (1), wherein the generator controller (1) comprises a computing and control unit (4), wherein the device comprises means for performing the steps of one or more of claims 1-11.

**Revendications**

1. Procédé de régulation d'un générateur comportant les étapes suivantes consistant à :

- prescrire une valeur de tension de sortie de consigne ($U_{soll1}$) du générateur,
- mesurer une température réelle (Tist) sur le générateur,
- comparer la température réelle (Tist) mesurée avec une valeur de seuil de température (T1) prescrite,
- prescrire une valeur de tension de sortie de consigne abaissée ($U_{soll2}$) du générateur, si la température réelle mesurée est supérieure à la valeur de seuil de température prescrite,
- abaisser pas à pas la tension de sortie de consigne du générateur en partant de la valeur de tension de sortie de consigne ($U_{soll1}$) en plusieurs étapes ayant chacune une largeur de pas qui est inférieure ou égale à 0,25 V, de préférence inférieure ou égale à 0,1 V,
- après ou parallèlement à chaque étape de l'abaissement progressif de la tension de sortie de consigne du générateur, répéter la mesure de la température réelle sur le générateur afin d'obtenir une nouvelle valeur de température réelle,
- comparer la nouvelle valeur de température réelle avec la valeur de seuil de température prescrite et
- fixer la tension de sortie de consigne du générateur à une valeur de tension de sortie de consigne augmentée ($U_{soll3}$), si la nouvelle valeur de température réelle est inférieure à la valeur de seuil de température prescrite.

2. Procédé selon la revendication 1, **caractérisé en ce que** la valeur de tension de sortie de consigne aug-

mentée (U$_{soll3}$) correspond à la valeur de tension de sortie de consigne (U$_{soll1}$) du générateur.

3. Procédé selon la revendication 1 ou 2, **caractérisé par** l'étape supplémentaire suivante consistant à :

     - augmenter pas à pas la tension de sortie de consigne du générateur avec une largeur de pas qui est inférieure ou égale à 0,25 V, de préférence inférieure ou égale à 0,1 V.

4. Procédé selon la revendication 3, **caractérisé par** les étapes supplémentaires suivantes consistant à :

     - après ou parallèlement à chaque étape de l'augmentation progressive de la tension de sortie de consigne du générateur, répéter la mesure de la température réelle sur le générateur afin d'obtenir une nouvelle valeur de température réelle,
     - comparer la nouvelle valeur de température réelle avec la valeur de seuil de température prescrite.

5. Procédé selon l'une des revendications 1 à 3, **caractérisé par** les étapes supplémentaires suivantes consistant à :

     - prescrire une température maximale (T$_{Max}$) qui est supérieure à la valeur de seuil de température prescrite (T1),
     - prescrire une ou plusieurs valeurs de seuil de température supplémentaires (T2, T3) pour lesquelles :

$$T1 < T2 < T3 < T_{Max},$$

     et
     - maintenir une valeur de tension de sortie de consigne instantanée pour la tension de sortie de consigne du générateur pendant la durée de plusieurs étapes, si la nouvelle valeur de température réelle franchit l'une des valeurs de seuil de température supplémentaires (T2, T3), et
     - répéter la mesure de la température réelle sur le générateur pendant la durée de ces étapes.

6. Procédé selon la revendication 5, **caractérisé par** l'étape supplémentaire suivante consistant à :

     - augmenter pas à pas la tension de sortie de consigne du générateur avec une largeur de pas qui est inférieure ou égale à 0,25 V, de préférence inférieure ou égale à 0,1 V, lorsqu'une baisse de la température réelle peut être détectée pendant la mesure répétée de la température réelle sur le générateur.

7. Procédé selon l'une des revendications précédentes, **caractérisé en ce que** l'évolution dans le temps du passage d'une valeur de tension de sortie de consigne à la valeur de tension de sortie de consigne suivante est linéaire.

8. Procédé selon l'une des revendications 1 à 6, **caractérisé en ce que** l'évolution dans le temps du passage d'une valeur de tension de sortie de consigne à la valeur de tension de sortie de consigne suivante augmente ou diminue à différentes vitesses.

9. Procédé selon l'une des revendications 1 à 6, **caractérisé en ce que** l'évolution dans le temps du passage d'une valeur de tension de sortie de consigne à la valeur de tension de sortie de consigne suivante a une allure exponentielle.

10. Procédé selon l'une des revendications 1 à 6, **caractérisé en ce que** l'évolution dans le temps du passage d'une valeur de tension de sortie de consigne à la valeur de tension de sortie de consigne suivante est dépendante de l'écart par rapport à la valeur de seuil de température (T1).

11. Procédé selon l'une des revendications 1 à 6, **caractérisé en ce que** l'évolution dans le temps du passage d'une valeur de tension de sortie de consigne à la valeur de tension de sortie de consigne suivante est dépendante de l'écart par rapport à une température maximale (T$_{Max}$).

12. Système constitué d'un capteur de température (3) pour mesurer une température réelle (Tist) sur le générateur et d'un régulateur de générateur (1), dans lequel le régulateur de générateur (1) comporte une unité de calcul et de commande (4), dans lequel le système comporte des moyens pour mettre en oeuvre les étapes d'une ou plusieurs des revendications 1 à 11.

Fig. 1

Temperatur

Tmax

T1

$T_{Ist}$

Fig. 2

Sollspannung

$U_{Soll1}$,
$U_{Soll3}$

ΔU

$U_{Soll}$

$U_{Soll2}$

$t_1$    $t_2$    $t_3$    Zeit

Fig. 3

**EP 2 115 868 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0462503 B1
- DE 102006019625 A1
- EP 0438884 A1